# EUROPÄISCHE PATENTSCHRIFT

(11) **EP 4 242 907 B1**
(45) Veröffentlichungstag und Bekanntmachung des Hinweises auf die Patenterteilung: **13.11.2024**
(21) Anmeldenummer: 22161193.2
(22) Anmeldetag: 09.03.2022
(51) Int. Cl.: G06K 7/10, G06K 19/07, F16K 17/40, B29C 49/42, F16K 31/06, F16K 37/00

(54) **MAGNETVENTIL**
SOLENOID VALVE
SOUPAPE ÉLECTROMAGNÉTIQUE

(43) Veröffentlichungstag der Anmeldung: 13.09.2023
(73) Patentinhaber: Eugen Seitz AG, 8623 Wetzikon (CH)
(72) Erfinder: Keel, Manuel, 5103 Wildegg (CH); Erni, Marco, 5632 Buttwil (CH)
(74) Vertreter: Clerc, Natalia

(56) Entgegenhaltungen:
- WO-A1-2009/118018
- US-A1- 2014 110 613
- US-A1- 2019 271 681

## Beschreibung

### TECHNISCHES GEBIET

Die vorliegende Erfindung betrifft ein Magnetventil, eine Magnetventileinheit und ein Verfahren zur Erkennung eines Magnetventils, insbesondere eines in Blasformprozessen verwendeten Magnetventils.

### STAND DER TECHNIK

Magnetventile lassen sich dank ihres Elektromagneten schnell schalten. Direktgesteuerte Ventile nutzen den Elektromagnet zum Antrieb des Kolbens. Vorgesteuerte oder druckgesteuerte Ventile verwenden zum Öffnen und Schliessen eine Druckdifferenz des Prozessdrucks, wobei der Elektromagnet die Druckdifferenz ermöglicht.

Pilotventile sind Magnetventile, die die Druckdifferenz eines Hauptventils steuern. Sie ermöglichen ein schnelles Schalten der Hauptventile. Sie sind klein und kostengünstig und lassen sich einfach auswechseln.

Derartige Pilotventile und Hauptventile werden beispielsweise in Blaseinrichtungen bzw. Blasmaschinen zur Formung von Hohlkörpern eingesetzt, insbesondere in Streckblasmaschinen. Beim Blasformen wird ein vortemperierter Vorformling aus einem thermoplastischen Kunststoff, vorzugsweise aus Polyethylenterephtalat (PET), mit einer Blasdüse der Blasmaschine verbunden. Durch Einblasen eines Prozessgases, vorzugsweise Druckluft, wird er geweitet. Durch Verwendung von Blasformen lässt sich die gewünschte Form erzielen. Je nach Verfahren wird nur geblasen oder der Rohling, d.h. der Vorformling, wird zudem während des Blasens mittels eines verschiebbaren Dorns bzw. einer verschiebbaren Reckstange, gestreckt. Dieses zweite Verfahren wird Streckblasen genannt.

Das Einblasen des Prozessgases erfolgt üblicherweise über zwei oder mehrere Stufen. Das Vorblasen findet bei einem tieferen Druck statt als das nachfolgende Hauptblasen. Bei der Entlüftung des Hohlkörpers nach dem Blasprozess wird das Prozessgas, insbesondere Druckluft, rückgewonnen und/oder nach aussen geführt.

Die einzelnen Blasschritte wie auch das Entlüften werden mittels Ventilen gesteuert. Die Herstellung bzw. Formung derartiger Hohlkörper mittels Blasmaschinen erfolgt innerhalb weniger Sekunden, vorzugsweise innerhalb von 1 bis 3 s. Entsprechend schnell und präzise müssen die Ventile schalten können.

Es werden somit hohe Anforderungen an die Pilotventile bzw. an die Magnetventile gestellt. Derartige Ventile müssen hohen Qualitätsansprüchen genügen. Zudem unterliegen sie einer Alterung und müssen regelmässig ersetzt werden. Mangelhafte Magnetventile führen zu Fehlproduktionen, die die Gesamtherstellungskosten erhöhen. Auch die Menge der Magnetventile führt dazu, dass ihr Ersatz ein relevanter Kostenfaktor des Produktionsprozesses bildet.

Im Stand der Technik sind RFID-Systeme bekannt, die der Identifikation von Objekten dienen (RFID = Radio-Frequency Identification). Ein zu identifizierendes Objekt wird mit einem RFID-Transponder versehen, der auch RFID-Tag genannt wird. Jeder RFID-Tag weist einen kennzeichnenden Code auf, der von einem Lesegerät des RFID-Systems gelesen werden kann. Der kennzeichnende Code wird im Folgenden Kenncode genannt. RFID-Tags weisen einen Mikrochip mit einem Speicher und eine Antenne auf. Dank des kennzeichnenden Codes lässt sich somit jedes Objekt mit einer individuellen Signatur bzw. Kennzeichnung versehen, so dass es von einem Lesegerät als Individuum erkannt werden kann. RFID-Tags lassen sich sehr klein gestalten. Je nach Ausführungsform benötigen sie einen eigenen Energiespeicher oder sie versorgen sich aus den Funksignalen des Lesegeräts. RFID-Technik ist hinlänglich bekannt und wird deshalb im Folgenden nicht weiter beschrieben.

Kostengünstige RFID-Tags weisen üblicherweise eine kurze Reichweite von wenigen Zentimetern auf. Für grössere Reichweiten muss der RFID-Tag eine eigene Energieversorgung aufweisen, also in Form eines aktiven RFID-Transponders ausgebildet sein. Dies erhöht jedoch die Grösse der Bauform und auch die Kosten massiv.

Um einen RFID Tag eindeutig einem Gegenstand zuzuordnen, wird üblicherweise eine dezidierte Antenne zur Kommunikation mit diesem RFID Tag eingesetzt. Die für mehrere RFID Tag's benötigte Vielzahl der Antennen erhöht deshalb die Kosten.

US2014/110613 A1, US2019/271681 A1 und WO2009/118018 A1 offenbaren Magnetventile, denen jeweils ein RFID-Tag zugeordnet ist.

### DARSTELLUNG DER ERFINDUNG

Es ist deshalb eine Aufgabe der Erfindung sicherzustellen, dass das Ersetzen von Magnetventilen einer Maschine, insbesondere einer Blasformmaschine, möglichst kostengünstig erfolgen kann, ohne die Qualität des Betriebsverhaltens der Maschine zu beeinträchtigen.

Diese Aufgabe lösen ein Magnetventil gemäss Anspruch 1, eine Magnetventileinheit gemäss Anspruch 7 sowie ein Verfahren zur Erkennung eines Magnetventils gemäss Anspruch 11.

Das erfindungsgemässe Magnetventil weist einen Elektromagneten mit einer Spule, einen RFID-Tag zur Erkennung des Magnetventils und eine Antenne zur unidirektionalen oder bidirektionalen Kommunikation mit dem RFID-Tag auf. Die Antenne ist die Spule des Elektromagneten.

Dank der Verwendung der Spule des Elektromagneten als Antenne ist eine eindeutige Zuordnung des RFID-Tags zum Ventil möglich, ohne dass Kosten für eine dezidierte Antenne anfallen.

Eine einseitige bzw. unidirektionale Kommunikation umfasst im Wesentlichen das Auslesen eines RFID-Tags, die zweiseitige bzw. bidirektionale Kommunikation umfasst auch das Beschreiben des RFID-Tags. Falls die Antenne auch der Energieversorgung dient, ist dies in der ein- und zweiseitigen Kommunikation mitumfasst.

Der Elektromagnet des Magnetventils weist üblicherweise die Spule auf, in der sich infolge eines elektrischen Stroms ein magnetisches Feld bildet, sodass ein Anker oder Kolben bewegt wird.

Das Magnetventil lässt sich somit mit einem RFID-Tag zur individuellen Erkennung versehen, wobei ein kostengünstiger RFID-Tag mit geringer Reichweite verwendet werden kann. Das Magnetventil lässt sich nach wie vor kostengünstig herstellen. Dies ist insbesondere für Pilotventile von Blasformmaschinen vorteilhaft.

Da die Spule des Elektromagneten die Sende-Antenne bildet, lässt sich das Lesegerät in einem grossen, vorzugsweise in einem beliebigen Abstand zum Magnetventil anordnen. Die Empfangs-Antenne des RFID-Tags befindet sich dank der gemeinsamen Anordnung im Magnetventil stets in unmittelbarer Nähe der Sende-Antenne und ist ihr eineindeutig zugeordnet.

Einerseits lässt sich somit feststellen, ob das Ersatzteil ein Originalmagnetventil des ursprünglichen Herstellers oder eine Kopie ist. Dadurch kann sichergestellt werden, dass die Maschine, insbesondere die Blasformmaschine, ausschliesslich mit Magnetventilen versehen wird, die den Qualitätsanforderungen genügen.

Bei Fehlverhalten der Maschine lässt sich zudem feststellen, welche Serie von Magnetventilen einen Fehler verursacht hat. Der Hersteller kann anschliessend weitere Magnetventile derselben Herstellungsserie rechtzeitig zurückrufen.

Ferner lassen sich die Betriebsparameter des Ventils nach Massgabe des Kenncodes des Magnetventils optimal einstellen. Beispielsweise lässt sich in einer Blasformmaschine der Boost- und Haltestrom entsprechend einstellen.

Vorteilhaft ist ferner, dass beim Wechseln des Magnetventils ein Schaltzyklen-Zähler der Maschinensteuerung nicht mehr manuell auf "Null" gesetzt werden muss. Beim Wechseln des Ventils kann die Maschinensteuerung dank des sich ändernden Kenncodes nun automatisch erkennen, dass eine neue Zählung beginnt. Dies vereinfacht die Wartung und vermindert Fehler durch das Wartungspersonal.

Erkennt eine Maschine mangels eines RFID-Tags oder aufgrund eines falschen Kenncodes eines Magnetventils, dass es sich um ein Drittprodukt und nicht um ein Originalprodukt handelt, so kann die Steuerung der Maschine je nach Ausführungsform den Betrieb verweigern. Alternativ kann sie die Betriebsparameter derart einstellen, dass ein möglichst qualitätserfüllender Betrieb nach wie vor gewährleistet ist. Beispielsweise kann im Falle einer Blasformmaschine der Boost-Strom reduziert werden, um eine Überlastung des Ventils zu verhindern, und/oder der Haltestrom des Ventils kann erhöht werden, um einen genügend hohen Haltestrom zu gewährleisten.

Vorzugsweise ist der Kenncode, d.h. die ID des RFID Tags, signiert abgelegt, um ein Plagiat zu vermeiden. Daten des RFID-Tags sind vorzugsweise durch eine Signatur basierend auf der Seriennummer des RFID Tags geschützt. Die Seriennummer ist im RFID-Tag einprogrammiert und nicht änderbar. Sie wird vorzugsweise über einen Algorithmus verschlüsselt und als Signatur im Speicher des RFID-Tags abgelegt, vorzugsweise im änderbaren Speicherbereich des RFID-Tags. Vorzugsweise werden weitere Daten zusammen mit der Signatur gespeichert. Dies stellt sicher, dass die Daten, sollten sie von einem RFID-Tag zum nächsten kopiert werden, ihre Gültigkeit verlieren.

Daten lassen sich vor und/oder während der Verwendung des Ventils in einem Gerät speichern. Beispielsweise lassen sich spezifische Kenndaten und/oder prozessabhängige Daten bereits herstellerseitig auf dem RFID-Tag speichern. Die Speicherung kann erfolgen, nachdem der RFID-Tag mit dem Ventil verbunden worden ist oder bereits vorher.

Vorzugsweise ist der RFID-Tag ein passiver Transponder. Die als Antenne wirkende Spule des Magnetventils wird vorzugsweise zur Energieversorgung verwendet. Dies verringert die Kosten und minimiert die Grösse des RFID-Tags.

Vorzugsweise weist der RFID-Tag einen Speicher auf, der mittels der Antenne auslesbar und beschreibbar ist. Dadurch lassen sich bei Verwendung des Magnetventils in einer Maschine neue Informationen auf dem RFID-Tag speichern. Derartige Informationen sind beispielsweise die Anzahl Schaltzyklen und/oder die Betriebsparameter des Magnetventils. Diese Daten lassen sich beispielsweise zur späteren Optimierung der Steuerung des Magnetventils verwenden. Da die Anzahl Schaltungen gespeichert wird, kann das Magnetventil zu einem gezielten individuellen Zeitpunkt ersetzt werden. Die Wartung bzw. das Ersetzen des Magnetventils kann somit an einem möglichst späten Zeitpunkt erfolgen und trotzdem vorbeugend sein. Dies erhöht die Einsatzdauer und minimiert die Prozesskosten.

In bevorzugten Ausführungsformen ist der RFID-Tag am oder im Gehäuse des Magnetventils angeordnet. Vorzugsweise ist der RFID-Tag auf das Gehäuse aufgeklebt oder in einer Öffnung des Gehäuses eingeschoben und darin eingeklebt oder auf andere Art und Weise darin fixiert. Dies weist den Vorteil auf, dass das Gehäuse des Magnetventils und das Magnetventil an sich nicht geändert werden müssen. Bereits vorhandene Magnetventile lassen sich mit einem RFID-Tag versehen und die bereits vorhandene Spule des Elektromagneten lässt sich als Sendeantenne verwenden.

Der RFID-Tag ist vorzugsweise disk-förmig oder stabförmig ausgebildet.

Die erfindungsgemässe Idee lässt sich für verschiedene Magnetventile bekannter Art umsetzen. Vorzugsweise ist das Magnetventil ein Pilotventil zur Steuerung eines Kolbenventils, noch bevorzugter ein Pilotventil einer Blasformeinrichtung.

Die erfindungsgemässe Magnetventileinheit weist ein oben beschriebenes Magnetventil und eine Steuervorrichtung auf. Die Steuervorrichtung weist einen Schaltkreis mit einem RFID-Treiber auf, wobei der Schaltkreis eine Frequenzadaption aufweist zur Anpassung einer Frequenz eines Schwingkreises der Spule des Elektromagneten an eine RFID Standard Frequenz.

RFID Standard Frequenzen sind die in den für ein jeweiliges Land geltenden Regeln festgelegten Frequenzen, beispielsweise die internationalen Standards gemäss ISO, die Europäischen Standards gemäss EPC Global und die amerikanischen Standards gemäss ANSI. RFID Standard Frequenzen ermöglichen Kompatibilität von verschiedenen Produkten.

Dadurch lässt sich die Spule mit einer für den Antrieb des Ventilankers optimalen Spannung (AC oder DC) verwenden. Der Ventilanker ist vorzugsweise der Ventilkolben. Dank der Frequenzadaption ist es möglich, die Schwingfrequenz auf Standardwerte des RFID-Systems anzupassen. Dadurch lassen sich bekannte Magnetventile, deren ursprüngliche Resonanzfrequenz ausserhalb der üblichen RFID-Frequenzen liegen, auf einfache Art und Weise in ein RFID-System einbinden und ihre Spule lässt sich auf einfache Art und Weise trotzdem als Sendeantenne zur Kommunikation mit dem RFID-Tag verwenden.

Die Resonanzfrequenz eines Schwingkreises eines Magnetventils einer Blasformmaschine liegt üblicherweise im Bereich von ca. 100 kHz. Eine der tiefsten RFID Standardfrequenzen beträgt 125 kHz. Die Frequenzadaption dient vorzugsweise der Erhöhung der Frequenz des Schwingkreises der Spule. Vorzugsweise ist die Frequenz des Schwingkreises der Spule auf mindestens 125 kHz anpassbar.

Die Frequenzadaption ist vorzugsweise Teil eines Parallelschwingkreises. Die Frequenzadaption, insbesondere der Parallelschwingkreis, lässt sich an unterschiedlichen Stellen der Vorrichtung anordnen. Vorzugsweise befindet sie sich in einer Steuereinheit einer Magnetventilsteuerung, vorzugsweise in einer Steuerbox. Je nach Ausführungsform steuert die Magnetventilsteuerung nur ein Magnetventil oder eine Vielzahl von Magnetventilen, um diese gezielt gleichzeitig oder zu unterschiedlichen Zeiten zu betätigen, d.h. zu öffnen und zu schliessen.

In anderen Ausführungsformen befindet sich die Frequenzadaption im Magnetventil oder in einem Stecker einer Kabelverbindung zwischen einer Leseeinheit des RFID-Systems und dem Magnetventil.

Die Leseeinheit des RFID-Systems kann in dieser Ausführungsform, jedoch auch in allen anderen Ausführungsformen, ein separates Bauteil der Maschine sein oder sie kann in der Steuereinheit, insbesondere in der Steuerbox, zur Betätigung des Magnetventils integriert sein.

In bevorzugten Ausführungsformen ist eine Steuervorrichtung vorhanden, die das RFID-System und auch die Betätigung des Ventils steuert. In bevorzugten Ausführungsformen weist die Steuervorrichtung deshalb ferner einen Ventiltreiber zur Betätigung des Magnetventils sowie ein Umschaltelement auf, wobei das Umschaltelement ermöglicht, dass entweder der Ventiltreiber das Magnetventil betätigt oder der RFID-Treiber die Antenne aktiviert.

Im erfindungsgemässen Verfahren zur Erkennung des oben beschriebenen Magnetventils wird die Spule des Elektromagneten des Magnetventils als Antenne zur Kommunikation mit dem RFID-Tag des Magnetventils verwendet.

Vorzugsweise wird der RFID-Tag mindestens nach jedem Neustart der Maschine abgefragt.

Vorzugsweise erfolgt die Kommunikation mit dem RFID-Tag in den Pausen zwischen den Betätigungen des Magnetventils. Dadurch wird die Betätigung des Ventils nicht durch Lese- oder Schreibvorgänge des RFID-Tags beeinträchtigt. Dies ermöglicht auch die Verwendung einer eigenen Frequenz für den Lese- und/oder Schreibvorgang des RFID-Tags.

Vorzugsweise wird eine Frequenz eines Schwingkreises des Magnetventils zwecks Kommunikation mit dem RFID-Tag erhöht.

In einer einfachen Variante des Verfahrens wird lediglich der Kenncode des RFID-Tags gelesen, um das Magnetventil zu identifizieren. In weiteren einfachen Varianten wird aufgrund des Kenncodes entschieden, ob die Maschine in Betrieb gesetzt wird oder nicht.

In anderen Varianten werden die Steuerparameter zur Steuerung eines Öffnens und Schliessens des Magnetventils entsprechend von Informationen auf dem RFID-Tag angepasst. In weiteren Varianten werden zusätzlich oder alternativ zur Anpassung der Steuerparameter Informationen zu erfolgten Schaltzyklen und/oder Informationen bezüglich verwendeter Schaltparameter auf den RFID-Tag gespeichert. Diese Informationen lassen sich beispielsweise anschliessend von der Maschinensteuerung auswerten und für den weiteren Betrieb der Maschine verwenden und/oder zur Erstellung einer Mitteilung verwenden, wann das Magnetventil ausgetauscht oder gewartet werden muss.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine schematische Darstellung eines Gehäuseblocks mit Prozessventilen einer Blasformmaschine mit einer erfindungsgemässen Magnetventileinheit;
- Figur 2: eine schematische Darstellung einer erfindungsgemässen Magnetventileinheit mit einem erfindungsgemässen Magnetventil gemäss einer ersten Ausführungsform;
- Figur 3: eine schematische Darstellung einer erfindungsgemässen Magnetventileinheit mit einem erfindungsgemässen Magnetventil gemäss einer zweiten Ausführungsform;
- Figur 4: eine schematische Darstellung eines Schwingkreises mit einer Frequenzadaption;
- Figur 5: eine graphische Darstellung der Betätigung des Ventils und der RFID-Kommunikation als Funktion der Zeit und
- Figur 6: eine schematische Darstellung der Steuerung des Magnetventils und der RFID Kommunikation.

### BESCHREIBUNG BEVORZUGTER AUSFÜHRUNGSFORMEN

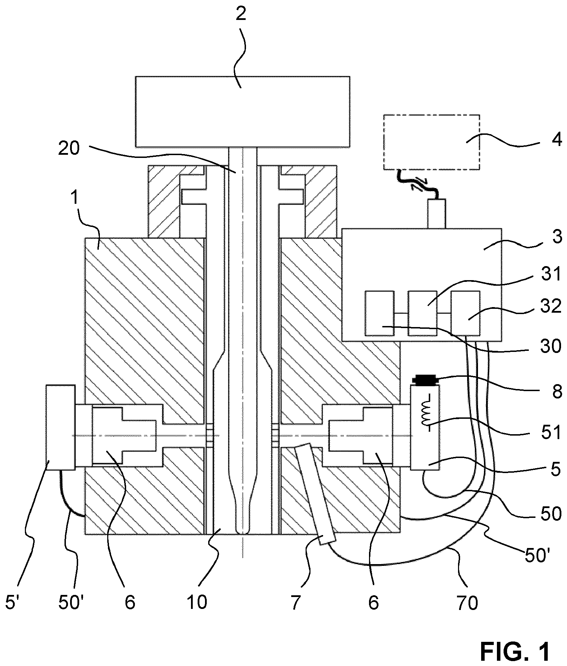

Figur 1 zeigt einen bevorzugten Anwendungsbereich des erfindungsgemässen Magnetventils 5. Es handelt sich um einen Gehäuseblock 1 einer Blasformmaschine. Der Gehäuseblock 1 weist eine Durchgangsbohrung 10 auf, die von einem Streckdorn 20 durchsetzt ist, der mit einer Streckdornvorrichtung 2 verbunden ist. Ein Rohling eines aufzublasenden Körpers, insbesondere einer PET-Flasche, lässt sich an oder in der Durchgangsbohrung 10 anordnen. Derartige Blasformmaschinen sind im Stand der Technik weitgehend bekannt und werden deshalb nicht weiter beschrieben.

Sie weisen, wie eingangs erwähnt, mehrere Ventile auf, die im Verlaufe des Blasprozesses zu unterschiedlichen Zeiten betätigt werden, um den Rohling mittels Blasluft in die gewünschte Form zu bringen. In dieser Ansicht sind zwei Ventile dargestellt. Sie umfassen jeweils ein Pilotventil 5, 5' in Form eines Magnetventils sowie ein Hauptventil 6 in Form eines pneumatischen Kolbenventils.

Zur Messung des Blasdrucks im Gehäuseblock 1 ist üblicherweise ein Drucksensor vorhanden, der in der Figur 1 mit dem Bezugszeichen 7 versehen ist.

Eine Steuervorrichtung 3 ist über eine erste Verbindungsleitung 50 mit einem ersten Pilotventil 5 verbunden und über eine zweite Verbindungsleitung 50' mit einem zweiten Pilotventil 5'. Die Ventile können identisch sein und demselben Zweck dienen oder es können unterschiedliche Ventile sein. Vorzugsweise sind mehr als diese zwei Ventile vorhanden.

Am ersten Pilotventil 5 ist ein RFID-Tag 8 angebracht, am zweiten Pilotventil 5' nicht. Je nach Ausführungsform sind alle Pilotventile 5 mit RFID-Tags 8 versehen oder nur einige davon. Es empfiehlt sich jedoch, sämtliche Magnetventile 5, 5' mit derartigen RFID-Tags 8 zu versehen, um eine optimale Qualitätssicherung zu gewährleisten.

Eine dritte Verbindungsleitung 70 verbindet die Steuervorrichtung 3 mit dem Drucksensor 7.

Die Steuereinheit 3 ist ferner mit einer Maschinensteuerung 4 verbunden. Vorzugsweise ist bildet die Steuereinheit 3 eine von der Maschinensteuerung 4 separate Einheit. Sie kann jedoch auch Teil der Maschinensteuerung 4 sein.

Die Steuervorrichtung 3 weist eine Steuerlogik 30, einen RFID-Treiber 31 sowie eine Frequenzadaption 32 auf.

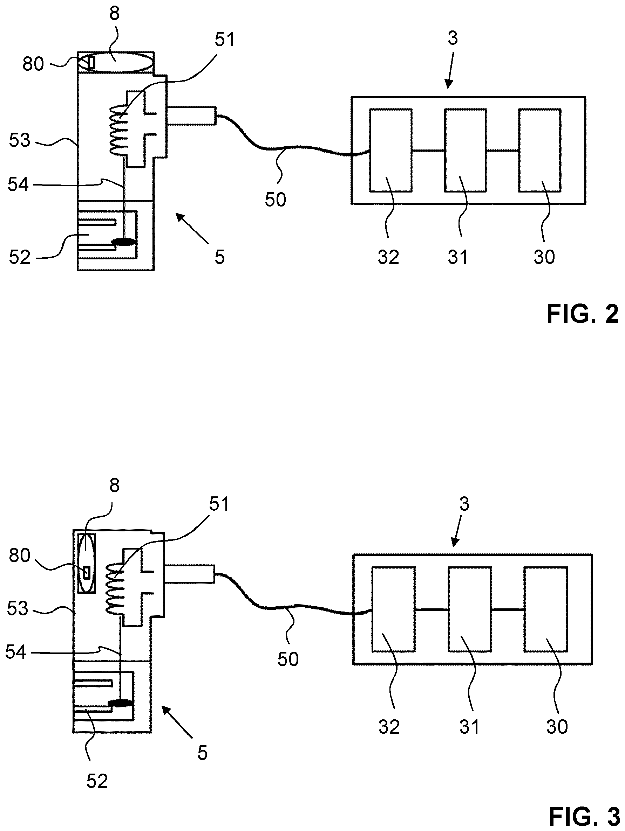

In Figur 2 ist eine erfindungsgemässe Magnetventileinheit dargestellt, die die Steuervorrichtung 3, die Verbindungsleitung 50, das Pilotventil 5 und ein am Pilotventil 5 angebrachtes RFID-Tag 8 aufweist.

Das Pilotventil 5 weist eine Magnetspule bzw. eine Spule 51 sowie einen pneumatischen Teil 52 auf. Durch Aktivierung der Magnetspule wird ein Anker 54 bewegt, der im pneumatischen Teil 52 mindestens einen Kanal öffnet bzw. schliesst. Durch diesen mindestens einen Kanal fliesst das Steuermedium zur pneumatischen Steuerung des mit einem Prozessdruck beaufschlagen Hauptventils 6. Derartige Pilotventile sind im Stand der Technik bekannt und werden deshalb nicht weiter erläutert.

Der RFID-Tag 8 ist in diesem Beispiel am Gehäuse 53 des Pilotventils 5 befestigt, beispielsweise aufgeklebt. Er ist vorzugsweise diskförmig ausgebildet. Vorzugsweise befindet er sich im benachbarten Bereich der Spule 51 des Pilotventils 5. Der Abstand ist so bemessen, dass eine Kommunikation zwischen der Spule 51 des Pilotventils und einer Antenne des RFID-Tags 8 erfolgen kann. Die Antenne des RFID-Tags 8 ist üblicherweise ebenfalls eine Spule.

In der Ausführungsform gemäss Figur 3 ist der RFID-Tag 8 stabförmig ausgebildet. Er ist in einer Bohrung im Gehäuse 53 des Pilotventils 5 befestigt, vorzugsweise eingeklebt. Er befindet sich wiederum benachbart zur Spule 51 des Pilotventils 5 und eine Kommunikation zwischen den zwei Antennen ist wiederum möglich. Die Antenne des RFID-Tags 8 ist wiederum vorzugsweise eine Spule. Dies gilt auch für andere Formen von RFID-Tags.

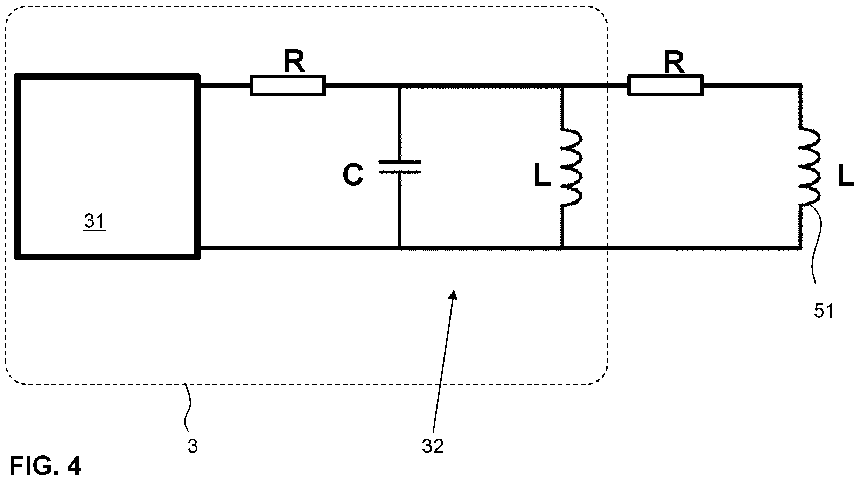

Die Steuereinheit 3 weist einen Schwingkreis mit einer Frequenzadaption 32 auf, wie dies Figur 4 gut erkennbar ist. Der RFID-Treiber 31 ist mit der Spule 51 des Pilotventils 5 verbunden. Die Frequenzadaption 32 umfasst eine Kapazität C sowie eine weitere Spule L. Widerstände R sind entsprechend im Schwingkreis angeordnet. Die Frequenzadaption ermöglicht eine Veränderung der für die Spule 51 des Pilotventils 5 üblichen Frequenz. Vorzugsweise wird die Frequenz auf eine RFID-Standardfrequenz geändert, üblicherweise auf diese Frequenz erhöht.

Die Spule 51 des Pilotventils 5 wird vorzugsweise einerseits als Antenne zum Lesen bzw. Beschreiben des RFID-Tags 8 verwendet und andererseits zur Erzeugung des Magnetfelds zum Bewegen des Ankers 54 bzw. Kolbens des Magnetventils und somit zum Öffnen und/oder Schliessen des Magnetventils verwendet. Diese zwei Funktionen werden abwechslungsweise ausgeübt.

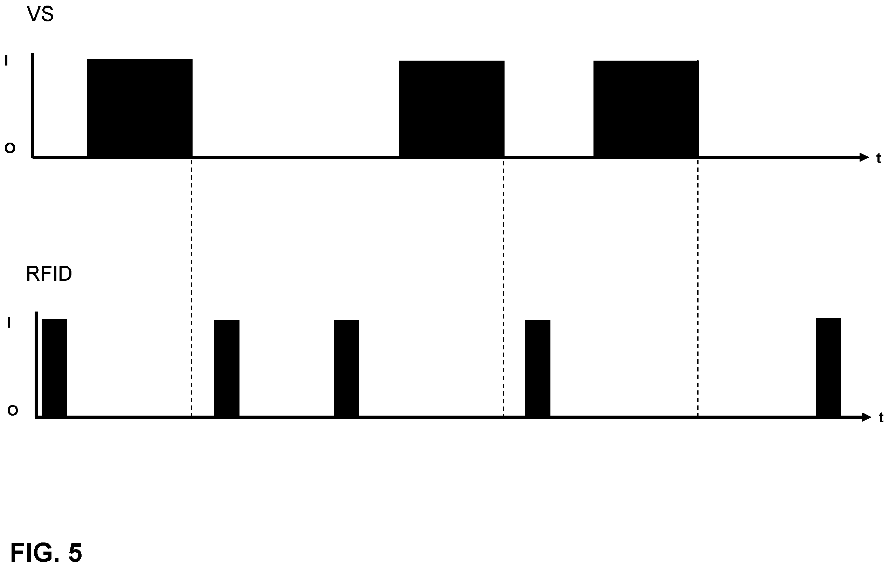

Dies ist in Figur 5 erkennbar. Die obere Graphik zeigt die Ventilsteuerung VS, wobei der durch die Spule fliessende Strom I in Funktion der Zeit t dargestellt ist. Die schwarzen Blöcke zeigen jeweils die Zeitabschnitte, in denen der Strom durch die Spule fliesst und den Anker anzieht, wodurch das Ventil betätigt und somit eingeschaltet ist.

Die untere Graphik zeigt die RFID-Kommunikation zwischen Spule 51 des Ventils 5 und dem RFID-Tag 8. Die Zeitabschnitte sind dieselben wie im oberen Graph. Die schwarzen Blöcke zeigen die Bereiche, in denen der RFID-Tag 8 gelesen und/oder beschrieben wird. Es ist in Figur 5 gut erkennbar, dass das RFID-System nur dann aktiv ist, wenn das Magnetventil 5 nicht betätigt ist.

Die Darstellung in Figur 5 ist lediglich schematisch. Vorzugsweise wird der RFID-Tag jedes Mal abgefragt, wenn die Maschine neu gestartet wird. Anschliessend hängt es von der Art des Ventils und/oder der Art der gewünschten Qualitätssicherung und/oder der Art der Maschinensteuerung bzw. der Magnetventilsteuerung ab, nach wie vielen Zyklen der RFID-Tag 8 gelesen und/oder beschrieben wird. Beispielsweise wird das RFID-System nur nach jedem zehnten Schaltzyklus des Ventils aktiviert oder nach jedem hundertsten oder einem anderen ganzzahligen Vielfachen von Zyklen aktiviert. In bevorzugten Ausführungsformen kann die Kommunikation immer erfolgen, ausser das Magnetventil wird betätigt.

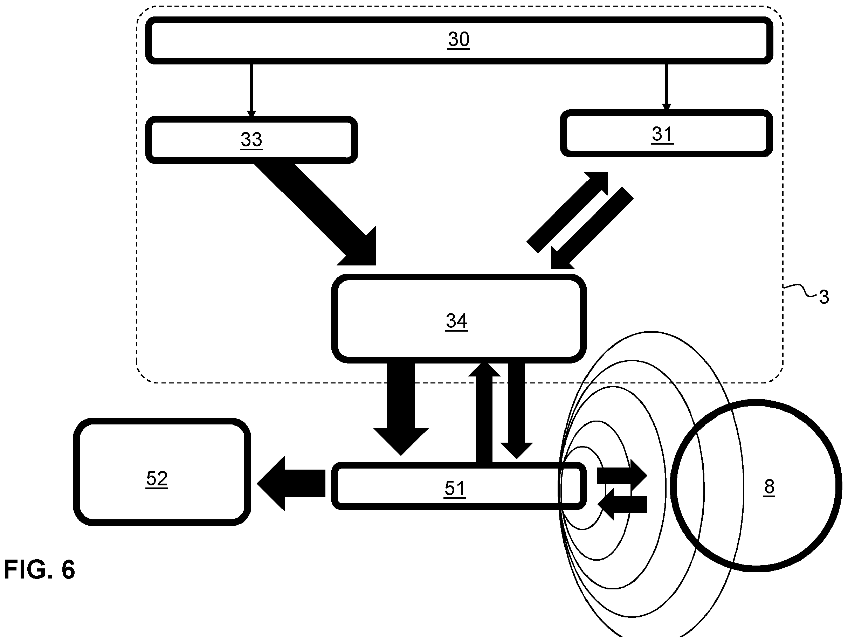

Figur 6 zeigt in einer schematischen Darstellung die entsprechende Steuerung. Die Steuerlogik 30 der Steuervorrichtung 3 oder eine übergeordnete Steuerlogik aktiviert entweder einen Ventiltreiber 33 zur Betätigung des Magnetventils 5 oder den RFID-Treiber 31 zur Kommunikation mit dem RFID-Tag 8. Ein Umschaltelement 34, das auch die Frequenzadaption 32 beinhaltet, wird entsprechend betätigt. In einer ersten Einstellung des Umschaltelements 34 erzeugt die Spule 51 des Magnetventils 5 ein Magnetfeld zur Betätigung des Ankers 54 bzw. des Kolbens des Ventils, wobei der Anker 54 bzw. der Kolben den pneumatischen Teil 52 des Magnets beeinflusst. In einer zweiten Einstellung des Umschaltelements 34 wirkt die Spule 51 als Antenne. Üblicherweise erzeugt es dabei ein hochfrequentes elektromagnetisches Wechselfeld, welches den passiven RFID-Tag 8 mit Energie versorgt und welches vom RFID-Tag 8 zwecks Datenübermittlung beeinflusst wird.

Die breiten Pfeile in Figur 6 zeigen die erste Einstellung, in welchem das Magnetventil 5 betätigt wird. Die schmalen Pfeile und die kreisförmigen dünnen Linien zeigen die zweite Einstellung, in der das RFID-System aktiv ist.

Die oben genannte Ausbildung und die genannten Verfahren lassen sich auf andere Arten von Magnetventilen ebenso anwenden. Sie sind nicht auf Pilotventile beschränkt.

Die erfindungsgemässe Verwendung der Spule eines Magnetventils zur Kommunikation mit einem RFID-Tag ermöglicht eine kostengünstige Qualitätssicherung bei der Verwendung von Magnetventilen, insbesondere in Blasformmaschinen.

### BEZUGSZEICHENLISTE

| | | | |
|---|---|---|---|
| 1 | Gehäuseblock | 52 | pneumatischer Teil |
| 10 | Durchgangsbohrung | 53 | Gehäuse |
| | | 54 | Anker |
| 2 | Streckvorrichtung | | |
| 20 | Streckdorn | 6 | Hauptventil |
| 3 | Steuervorrichtung | 7 | Drucksensor |
| 30 | Steuerlogik | 70 | dritte Verbindungsleitung |
| 31 | RFID-Treiber | | |
| 32 | Frequenzadaption | 8 | RIFD-Tag |
| 33 | Ventiltreiber | 80 | Speicher |
| 34 | Umschaltelement | | |
| | | C | Kondensator |
| 4 | Maschinensteuerung | I | Strom |
| | | L | Spule |
| 5 | erstes Pilotventil | R | Widerstand |
| 5' | zweites Pilotventil | VS | Ventilsteuerung |
| 50 | erste Verbindungsleitung | t | Zeit |
| 50' | zweite Verbindungsleitung | | |
| 51 | Spule | | |

## Patentansprüche

1. Magnetventil, wobei das Magnetventil einen Elektromagneten mit einer Spule (51) und einen RFID-Tag (8) zur Erkennung des Magnetventils aufweist,
**dadurch gekennzeichnet, dass** das Magnetventil eine Antenne zur unidirektionalen oder bidirektionalen Kommunikation mit dem RFID-Tag (8) aufweist, wobei die Antenne die Spule (51) des Elektromagneten ist.

2. Magnetventil nach Anspruch 1, wobei der RFID-Tag (8) ein passiver Transponder ist.

3. Magnetventil nach einem der Ansprüche 1 oder 2, wobei der RFID-Tag (8) einen Speicher (80) aufweist, der mittels der Antenne auslesbar und beschreibbar ist.

4. Magnetventil nach einem der Ansprüche 1 bis 3, wobei das Magnetventil ein Gehäuse (53) aufweist und wobei der RFID-Tag (8) am oder im Gehäuse (53) angeordnet ist.

5. Magnetventil nach einem der Ansprüche 1 bis 4, wobei das Magnetventil ein Pilotventil (5) zur Steuerung eines Kolbenventils (6) ist.

6. Magnetventil nach einem der Ansprüche 1 bis 5, wobei das Magnetventil ein Ventil einer Blasformeinrichtung ist.

7. Magnetventileinheit mit mindestens einem Magnetventil (5) gemäss einem der Ansprüche 1 bis 6 und einer Steuervorrichtung (3), wobei die Steuervorrichtung (3) einen Schaltkreis mit einem RFID-Treiber (31) aufweist und wobei der Schaltkreis eine Frequenzadaption (32) aufweist zur Anpassung einer Frequenz eines Schwingkreises der Spule (51) an eine RFID Standard Frequenz.

8. Magnetventileinheit nach Anspruch 7, wobei die Frequenzadaption (32) der Erhöhung der Frequenz des Schwingkreises der Spule (51) dient.

9. Magnetventil nach einem der Ansprüche 1 bis 6 oder Magnetventileinheit nach einem der Ansprüche 7 und 8, wobei Daten des RFID-Tags (8) durch eine Signatur basierend auf einer Seriennummer des RFID Tags geschützt sind.

10. Magnetventileinheit nach einem der Ansprüche 7 bis 9, wobei die Steuervorrichtung (3) ferner einen Ventiltreiber (34) zur Betätigung des Magnetventils (5) sowie ein Umschaltelement (34) aufweist, wobei das Umschaltelement (34) ermöglicht, dass entweder der Ventiltreiber (33) das Magnetventil (5) betätigt oder der RFID-Treiber (31) die Antenne aktiviert.

11. Verfahren zur Erkennung eines Magnetventils gemäss einem der Ansprüche 1 bis 6, wobei die Spule (51) des Elektromagneten des Magnetventils (5) als Antenne zur Kommunikation mit dem RFID-Tag (8) des Magnetventils (5) verwendet wird.

12. Verfahren nach Anspruch 11, wobei die Kommunikation mit dem RFID-Tag (8) in den Pausen zwischen den Betätigungen des Magnetventils (5) erfolgt.

13. Verfahren nach einem der Ansprüche 11 oder 12, wobei eine Frequenz eines Schwingkreises des Magnetventils (5) zwecks Kommunikation mit dem RFID-Tag (8) erhöht wird.

14. Verfahren nach einem der Ansprüche 11 bis 13, wobei Steuerparameter zur Betätigung des Magnetventils (5) entsprechend von Informationen auf dem RFID-Tag (8) angepasst werden.

15. Verfahren nach einem der Ansprüche 11 bis 14, wobei Informationen zu erfolgten Schaltzyklen und/oder Informationen bezüglich verwendeter Schaltparameter auf den RFID-Tag (8) gespeichert werden.

## Claims

1. Solenoid valve, wherein the solenoid valve has an electromagnet with a coil (51) and an RFID tag (8) for identifying the solenoid valve, **characterized in that** the solenoid valve has an antenna for unidirectional or bidirectional communication with the RFID tag (8), wherein the antenna is the coil (51) of the solenoid valve.

2. Solenoid valve according to Claim 1, wherein the RFID tag (8) is a passive transponder.

3. Solenoid valve according to either Claim 1 or Claim 2, wherein the RFID tag (8) has a memory (80) which is readable and writable by means of the antenna.

4. Solenoid valve according to one of Claims 1 to 3, wherein the solenoid valve has a housing (53) and wherein the RFID tag (8) is arranged on or in the housing (53).

5. Solenoid valve according to one of Claims 1 to 4, wherein the solenoid valve is a pilot valve (5) for controlling a piston valve (6).

6. Solenoid valve according to one of Claims 1 to 5, wherein the solenoid valve is a valve of a blow moulding device.

7. Solenoid valve unit having at least one solenoid valve (5) according to one of Claims 1 to 6 and a control apparatus (3), wherein the control apparatus (3) has a circuit with an RFID driver (31) and wherein the circuit has a frequency adaption (32) for adjusting a frequency of an oscillating circuit of the coil (51) to an RFID standard frequency.

8. Solenoid valve unit according to Claim 7, wherein the frequency adaption (32) serves to increase the frequency of the oscillating circuit of the coil (51).

9. Solenoid valve according to one of Claims 1 to 6 or a solenoid valve unit according to one of claims 7 and 8, wherein data of the RFID tag (8) are protected by a signature based on a serial number of the RFID tag.

10. Solenoid valve unit according to one of Claims 7 to 9, wherein the control apparatus (3) further has a valve driver (34) for actuating the solenoid valve (5), and also a changeover element (34), wherein the changeover element (34) makes it possible that either the valve driver (33) actuates the solenoid valve (5) or the RFID driver activates the antenna (31).

11. Method for identifying a solenoid valve according to one of Claims 1 to 6, wherein the coil (51) of the electromagnet of the solenoid valve (5) is used as the antenna for communication with the RFID tag (8) of the solenoid valve (5).

12. Method according to Claim 11, wherein communication with the RFID tag (8) takes place in the breaks between the actuations of the solenoid valve (5).

13. Method according to either Claim 11 or Claim 12, wherein a frequency of an oscillating circuit of the solenoid valve (5) is increased for the purpose of communication with the RFID tag (8).

14. Method according to one of Claims 11 to 13, wherein control parameters for actuation of the solenoid valve (5) are adjusted in accordance with information on the RFID tag (8).

15. Method according to one of Claims 11 to 14, wherein information on switching cycles which have taken place and/or information relating to switching parameters which have been used is stored on the RFID tag (8).

## Revendications

1. Electrovanne, l'électrovanne présentant un électroaimant pourvu d'une bobine (51) et une étiquette RFID (8) pour reconnaître l'électrovanne,
**caractérisée en ce que** l'électrovanne présente une antenne pour une communication unidirectionnelle ou bidirectionnelle avec l'étiquette RFID (8), l'antenne étant la bobine (51) de l'électroaimant.

2. Electrovanne selon la revendication 1, dans laquelle l'étiquette RFID (8) est un transpondeur passif.

3. Electrovanne selon l'une quelconque des revendications 1 ou 2, dans laquelle l'étiquette RFID (8) présente une mémoire (80) qui est lisible et inscriptible au moyen de l'antenne.

4. Electrovanne selon l'une quelconque des revendications 1 à 3, dans laquelle l'électrovanne présente un boîtier (53), et dans laquelle l'étiquette RFID (8) est disposée sur ou dans le boîtier (53).

5. Electrovanne selon l'une quelconque des revendications 1 à 4, dans laquelle l'électrovanne est une vanne pilote (5) pour commander une vanne à piston (6).

6. Electrovanne selon l'une quelconque des revendications 1 à 5, dans laquelle l'électrovanne est une vanne d'un dispositif de soufflage.

7. Unité d'électrovanne comprenant au moins une électrovanne (5) selon l'une quelconque des revendications 1 à 6 et un dispositif de commande (3), dans laquelle le dispositif de commande (3) présente un circuit muni d'un pilote RFID (31), et dans laquelle le circuit présente une adaptation de fréquence (32) pour adapter une fréquence d'un circuit oscillant de la bobine (51) à une fréquence standard RFID.

8. Unité d'électrovanne selon la revendication 7, dans laquelle l'adaptation de fréquence (32) sert à augmenter la fréquence du circuit oscillant de la bobine (51).

9. Electrovanne selon l'une quelconque des revendications 1 à 6 ou unité d'électrovanne selon l'une quelconque des revendications 7 et 8, dans laquelle des données de l'étiquette RFID (8) sont protégées par une signature sur la base d'un numéro de série de l'étiquette RFID.

10. Unité d'électrovanne selon l'une quelconque des revendications 7 à 9, dans laquelle le dispositif de commande (3) présente en outre un pilote de vanne (34) pour actionner une électrovanne (5) ainsi qu'un élément de commutation (34), dans laquelle l'élément de commutation (34) permet soit au pilote de vanne (33) d'actionner l'électrovanne (5), soit au pilote RFID (31) d'activer l'antenne.

11. Procédé permettant de reconnaître une électrovanne selon l'une quelconque des revendications 1 à 6, dans lequel la bobine (51) de l'électroaimant de l'électrovanne (5) est utilisée comme une antenne pour communiquer avec l'étiquette RFID (8) de l'électrovanne (5).

12. Procédé selon la revendication 11, dans lequel la communication avec l'étiquette RFID (8) est effectuée dans les pauses entre les actionnements de l'électrovanne (5).

13. Procédé selon l'une quelconque des revendications 11 ou 12, dans lequel une fréquence d'un circuit oscillant de l'électrovanne (5) est augmentée en vue de communiquer avec l'étiquette RFID (8).

14. Procédé selon l'une quelconque des revendications 11 à 13, dans lequel des paramètres de commande pour actionner l'électrovanne (5) sont adaptés selon des informations sur l'étiquette RFID (8).

15. Procédé selon l'une quelconque des revendications 11 à 14, dans lequel des informations sur des cycles de commutation effectués et/ou des informations concernant des paramètres de commutation utilisés sont stockées sur l'étiquette RFID (8).
